# EUROPEAN PATENT SPECIFICATION

(11) **EP 4 594 187 B1**
(45) Date of publication and mention of the grant of the patent: **01.07.2026**
(21) Application number: 23813105.6
(22) Date of filing: 27.09.2023
(51) Int. Cl.: B64F 1/00, B64C 25/58, A42B 3/06, F16F 7/12

(54) **AN ABSORBER**
ABSORBER
ABSORBEUR

(30) Priority: 30.09.2022 TR 202215005
(43) Date of publication of application: 06.08.2025
(73) Proprietor: Tusas- Turk Havacilik Ve Uzay Sanayii Anonim Sirketi, 06980 Ankara (TR); Gazi Universitesi, 06500 Yenimahalle/Ankara (TR)
(72) Inventor: CUDRI, Cebrail, 06980 Ankara (TR); BASAK, Hudayim, 06560 Yenimahalle/Ankara (TR)
(74) Representative: Berkkam, Ayfer
(86) International application number: PCT/TR2023/051040
(87) International publication number: WO 2024/072361

(56) References cited:
- US-A1- 2004 256 519
- US-A1- 2013 122 256
- US-A1- 2017 051 806
- US-A1- 2017 196 291
- US-A1- 2018 265 023

## Description

This invention relates to an absorber developed to protect equipment and/or a body of a living creature from the forces occurring on the body.

In important situations, such as protecting the equipment placed on the body against incoming forces or the health of an athlete in sports branches containing application of force, the person must be protected. There are absorbers which, in case of an impact, enable the protection of devices or systems used in aviation and space fields, protective helmets or sensitive devices used in mechanical systems. The concern of creating a load while protecting or absorbing the incoming forces is important for manufacturers and / or users.

US20190232601A1, which is included in the known-state of the art, discloses a protective material/structure based on a structure in which an inner and outer shell can move relative to each other, and which reduces the risk of injury to a person after contact.

US2018206580A1, which is included in the known-state of the art, discloses an impact protection device. The impact protection device comprises a support surface, a first plurality of flexible spines and a second plurality of flexible spines.

US2018265023A1, which is included in the known-state of the art, discloses an energy absorbing system that includes a multi-layer 3D printed lattice core composed of rod-shaped links of different densities to absorb energy upon impact. Impact absorption performance is optimized by using cores with negative and positive Poisson's ratios together, and links with different material properties are 3D printed during the manufacturing process.

US2004256519A1, which is included in the known-state of the art, discloses an aircraft recovery system that includes a passive retention system for ensuring the safe landing of lightweight unmanned aerial vehicles. The system includes a retention mechanism that locks the aircraft when it contacts a specific surface on the landing pad, and a cart for transportation after landing.

Thanks to an absorber according to the present invention, the loads are absorbed by preventing the loads on the body from damaging the body, and undesirable effects created on the equipment provided on the body, such as impact and vibration, are absorbed, so that the protection is provided.

Another object of the present invention is to obtain an absorbing system that provides protection through the absorber, by absorbing the loads occurring on the body mounted on an air vehicle. With the absorber, an absorbing system is obtained that protects the body and extends the maintenance period of the body, by absorbing the loads caused by the contact of the landing gear of the air vehicle with the ground.

An absorber realized to achieve the object of the invention, which is defined in the first claim and other claims dependent thereon, comprises at least a first piece located on a body (B). Any surfaces of the first piece and the second piece are positioned opposite each other, corresponding to each other. Multiple extensions made of a flexible material are provided on the first piece and the second piece, which extend from the first piece to the second piece and from the second piece to the first piece. The extensions can extend on the first piece and the second piece at the same angle or inclination.

In the absorber according to the invention, a third piece and a fourth piece are provided on the body, between the first piece and the second piece, so as to be opposite each other and form a box form with the first piece and the second piece. It comprises a plurality of protrusions made of a flexible material, which are located on the third piece and the fourth piece and absorb the forces on the body by engaging with the extensions or interposing between the extensions. The protrusions may be located at the same angle or inclination on the third piece and the fourth piece, or preferably, the protrusions may be located almost completely at 60 degrees on the third piece, while being located on the fourth piece at different angles to each other, such as almost completely -60 degrees.

In the absorber according to the invention, the absorber comprises protrusions located on the third piece and fourth piece, diagonally between the extensions towards the first piece or the second piece.

In an embodiment of the invention, the absorber comprises a form in which the third piece and the fourth piece will form a whole on the first piece and the second piece, due to the incoming loads. While the third piece and the fourth piece are placed on the first piece and the second piece, they are positioned on the first piece and the second piece by contacting a groove that extends longitudinally along the length of the pieces. While the third piece and the fourth piece are placed on the first piece and the second piece, the protrusions are almost completely interposed between the extensions, and the movement of the third piece and/or the fourth piece is stopped thanks to the contact of the third piece and the fourth piece with the grooves on the first piece and the second piece.

In an embodiment of the invention, the absorber comprises that the first piece, the second piece, the third piece and the fourth piece can be integrated into a box-shaped body, while being placed in the first mounting apparatus in a removable manner. The first piece, second piece, third piece and fourth piece placed in the first mounting apparatus can be replaced by the user as desired.

In an embodiment of the invention, the absorber comprises at least one landing gear on a body of an air vehicle, which contacts the ground (runway) during landing of the air vehicle to carry the air vehicle and/or allows the air vehicle to move on the ground. In order to absorb the reaction forces that occur when the air vehicle contacts the runway or the situations that affect the strength of the landing gear, the absorber is placed in the first mounting apparatus, and a second mounting apparatus is removably attached to the "skid" landing gear to move as a female-male connection within the first mounting apparatus. The second mounting apparatus is produced in "U" form.

In an embodiment of the invention, the absorber comprises extensions and protrusions that are made of polymer materials such as thermoplastic or rubber. Therefore, the incoming forces can be absorbed or the absorbing threshold is increased.

In an embodiment of the invention, the absorber comprises extension and/or protrusion that are produced by three-dimensional printing or any of the additive manufacturing methods. In this way, flexible and/or highly durable production is achieved.

In an embodiment of the invention, the absorber comprises a plurality of extensions extending from the first piece to the second piece and from the second piece to the first piece, with a narrowing cross-sectional area or a pointed tip in the form of a "hedgehog spine".

In an embodiment of the invention, the absorber comprises a plurality of protrusions extending from the third piece to the first piece or the second piece and from the fourth piece to the first piece or the second piece, with a narrowing cross-sectional area or a pointed tip in the form of a "hedgehog spine".

In an embodiment of the invention, the absorber comprises protrusions which push the extensions between the extensions or contact each other respectively in a "domino effect", when a force is applied to the third piece or the fourth piece, so that the force is absorbed.

The absorber realized to achieve the object of the present invention is illustrated in the attached drawings, in which:

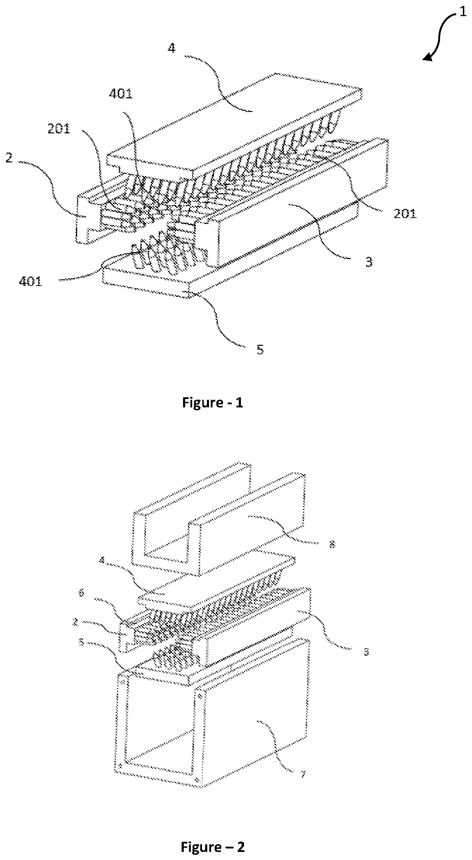

Figure 1 is a perspective view of the absorber.
Figure 2 is an exploded view of the absorber.

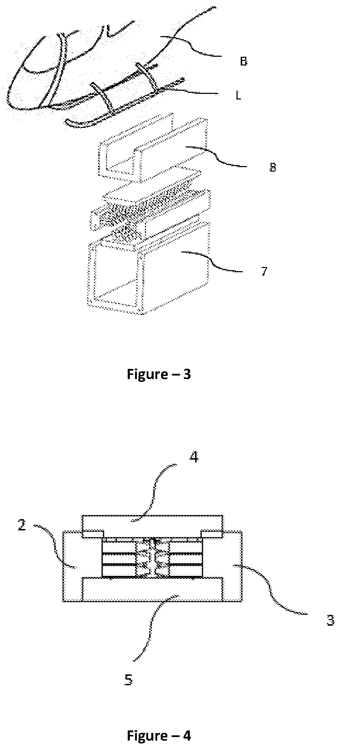

Figure 3 is an exploded view of the absorber on the body.
Figure 4 is a side view illustrating the protrusions between the extensions.

All the parts illustrated in figures are individually assigned a reference numeral and the corresponding terms of these numbers are listed below:
1. Absorber
2. First Piece
201. Extension
3. Second Piece
4. Third Piece
401. Protrusion
5. Fourth Piece
6. Groove
7. First Mounting Apparatus
8. Second Mounting Apparatus
(G) Body
(L) Landing Gear

The absorber (1) comprises a body (B); at least a first piece (2) located on the body (B); at least a second piece (3) positioned opposite the first piece (2); a plurality of extensions (201) made of a flexible material, located on the first piece (2) and second piece (3), and extending from the first piece (2) to the second piece (3) and from the second piece (3) to the first piece (2).

The absorber (1) according to the invention comprises at least a third piece (4) located on the body (B), between the first piece (2) and the second piece (3); a fourth piece (5) located on the body (B), between the first piece (2) and the second piece (2), so as to be opposite the third piece (4); a plurality of protrusions (401) made of a flexible material and located on the third piece (4) and fourth piece (5), wherein the protrusions (401) are interposed between the extensions (201) so as to absorb the forces occurring on the body (B).

There is a body (B) containing the air vehicle, equipment or a mechanism; and at least a first piece (2) located on the body (B). A second piece (3) is positioned opposite the first piece (2), at a distance therebetween. A plurality of extensions (201) made of a flexible material suitable for elastic deformation are located on the first piece (2) and the second piece (3), extending from the first piece (2) to the second piece (3) and from the second piece (3) to the first piece (2). Extensions (201) reduce the pressure by absorbing the loads occurring on the body (B) or on the first piece (2) or the second piece (3).

A third piece (4) is located on the body (B), between the first piece (2) and the second piece (3), at an equal distance from the first piece (2) and the second piece (3). A fourth piece (5) is located on the body (B) so as to be opposite the third piece (4), and to form a box-form between the first piece (2) and the second piece (3) together with the third piece (4). A plurality of protrusions (401) made of a flexible material is provided on the third piece (4) and the fourth piece (5), which is at least partially interposed between the extensions (201) and/or almost completely interposed between the extensions (201) thanks to the incoming force. The protrusions (401) are interposed between the extensions (201) with the incoming loads and almost completely reduce the pressure, so that service life of the body (B) is prolonged and the systems on the body (B) are prevented from being damaged (Figure-1, Figure-4).

The absorber (1) comprises a plurality of protrusions (401) extending from the third piece (4) and the fourth piece (5) towards the first piece (2) or the second piece (3). Since the protrusions (401) are located diagonally between the extensions (201), they almost completely absorb the pressure coming from all directions or occurring in all directions.

In an embodiment of the invention, the absorber (1) comprises at least one groove (6) which extends longitudinally along the first piece (2) and second piece (3), and allows the third piece (4) and fourth piece (5) to be placed on the first piece (2) and second piece (3) thanks to the incoming loads. The third piece (4) and the fourth piece (5) are placed in the groove (6) located on the first piece (2) and the second piece (3), thanks to the incoming loads. Therefore, it acts as a stopper allowing the protrusions (401) to move to a certain point between the extensions (201), and absorbs the incoming load as a whole.

In an embodiment of the invention, the absorber (1) comprises at least a first mounting apparatus (7) which enables the removable placement of the first piece (2), second piece (3), third piece (4) and fourth piece (5), and at least partially surrounds the pieces. Thanks to the first mounting apparatus (7), the first piece (2), the second piece (3), the third piece (4) and the fourth piece (5) are placed in the first mounting apparatus (7) and removably attached to an area to be protected from loads (Figure - 2).

In an embodiment of the invention, the absorber (1) comprises a body (B), which is an air vehicle; at least one landing gear (L) on the body (B), which contacts the ground (runway) during landing of the air vehicle (H) to carry the air vehicle and/or allows the air vehicle to move on the ground; a second mounting apparatus (8) removably attached to the landing gear (L), produced in "U" form, and moving in the first mounting apparatus (7). The second mounting apparatus (8) is attached removably in a form compatible manner with the landing gear (L) of the air vehicle, which is a helicopter. The loads generated by the contact of the air vehicle (H) with the runway are transmitted to the first piece (2), second piece (3), third piece (4) and fourth piece (5) that are located in the first mounting apparatus (7), so that the loads on the landing gear (L) are absorbed (Figure - 2, Figure - 3).

In an embodiment of the invention, the absorber (1) comprises the extension (201) and the protrusion (401) which are made of a polymer material and increase an absorbing threshold. Thanks to the extension (201) and protrusion (401) made of a polymer material, flexible extensions (201) and protrusions (401) with an improved absorbing capability are obtained.

In an embodiment of the invention, the absorber (1) comprises extension (201) and/or protrusion (401) produced by an additive manufacturing method, thereby being flexible and/or highly durable. With the additive manufacturing method, the extension (201) and protrusion (401) can be produced easily, in a design determined by the user or manufacturer.

In an embodiment of the invention, the absorber (1) comprises the extension (201) extending from the first piece (2) to the second piece (3) and from the second piece (3) to the first piece, with a narrowing cross-sectional area. The narrowing cross-sectional area of the extensions (201) enables the extensions to bend under a load, from the pointed tip to the other, wider tip, thereby improving the absorbing.

In an embodiment of the invention, the absorber (1) comprises the protrusion (401) extending from the third piece (4) to the first piece (2) or the second piece (3) and from the fourth piece (5) to the first piece (2) or the second piece (3), with a narrowing cross-sectional area. The narrowing cross-sectional area of the protrusions (401) enables them to be interposed between the extensions (201) easily, and to bend under a load, from the pointed tip to the other, wider tip, thereby improving the absorbing.

In an embodiment of the invention, the absorber (1) comprises a plurality of protrusions (401) interposed sequentially between the extensions (201) in a "domino effect", when a force is applied to the third piece (4) or the fourth piece (5). As the protrusions (401) are interposed between the extensions (201), they push the plurality of extensions (201), causing

## Claims

1. An absorber (1) comprising a body (B); at least a first piece (2) located on the body (B); at least a second piece (3) positioned opposite the first piece (2); a plurality of extensions (201) made of a flexible material, located on the first piece (2) and second piece (3), and extending from the first piece (2) to the second piece (3) and from the second piece (3) to the first piece (2), at least a third piece (4) located on the body (B), between the first piece (2) and the second piece (3); and a fourth piece (5) located on the body (B), between the first piece (2) and the second piece (2), so as to be opposite the third piece (4) forming a box form with the first piece (2) and the second piece (3); **characterized by** a plurality of protrusions (401) made of a flexible material and located on the third piece (4) and fourth piece (5), wherein the protrusions (401) extend from the third piece (4) and the fourth piece (5) towards the first piece (2) or the second piece (3) and are located diagonally between the extensions (201) such that they are interposed between the extensions (201) to absorb the forces occurring on the body (B).

2. An absorber (1) according to claim 1, **characterized by** at least one groove (6) which extends longitudinally along the first piece (2) and second piece (3), and allows the third piece (4) and fourth piece (5) to be placed on the first piece (2) and second piece (3) thanks to the incoming loads.

3. An absorber (1) according to any of the above claims, **characterized by** at least a first mounting apparatus (7) which enables the removable placement of the first piece (2), second piece (3), third piece (4) and fourth piece (5), and at least partially surrounds the pieces.

4. An absorber (1) according to claim 1, **characterized by** a body (B), which is an air vehicle; at least one landing gear (L) on the body (B), which contacts the ground (runway) during landing of the air vehicle (H) to carry the air vehicle and/or allows the air vehicle to move on the ground; a second mounting apparatus (8) removably attached to the landing gear (L), produced in "U" form, and moving in the first mounting apparatus (7).

5. An absorber (1) according to any of the above claims, **characterized by** the extension (201) and the protrusion (401) which are made of a polymer material and increase an absorbing threshold.

6. An absorber (1) according to any of the above claims, **characterized by** the extension (201) and/or protrusion (401) produced by an additive manufacturing method, thereby being flexible and/or highly durable.

7. An absorber (1) according to any of the above claims, **characterized by** the extension (201) extending from the first piece (2) to the second piece (3) and from the second piece (3) to the first piece, with a narrowing cross-sectional area.

8. An absorber (1) according to any of the above claims, **characterized by** the protrusion (401) extending from the third piece (4) to the first piece (2) or the second piece (3) and from the fourth piece (5) to the first piece (2) or the second piece (3), with a narrowing cross-sectional area.

9. An absorber (1) according to any of the above claims, **characterized by** a plurality of protrusions (401) interposed sequentially between the extensions (201) in a "domino effect", when a force is applied to the third piece (4) or the fourth piece (5).

## Patentansprüche

1. Absorber (1), umfassend: ein Gehäuse (B); mindestens ein erstes Teil (2) auf dem Gehäuse (B); mindestens ein zweites Teil (3) gegenüber dem ersten Teil (2); mehrere Verlängerungen (201) aus flexiblem Material, die auf dem ersten Teil (2) und dem zweiten Teil (3) angeordnet sind und sich vom ersten Teil (2) zum zweiten Teil (3) und vom zweiten Teil (3) zum ersten Teil (2) erstrecken; mindestens ein drittes Teil (4) auf dem Gehäuse (B) zwischen dem ersten Teil (2) und dem zweiten Teil (3); und ein viertes Teil (5) auf dem Gehäuse (B) zwischen dem ersten Teil (2) und dem zweiten Teil (3), das dem dritten Teil (4) gegenüberliegt und mit dem ersten Teil (2) und dem zweiten Teil (3) eine Kastenform bildet, **dadurch gekennzeichnet, dass** eine Vielzahl von Vorsprüngen (401) aus flexiblem Material auf dem dritten Teil (4) und dem vierten Teil (5) vorgesehen ist, wobei sich die Vorsprünge (401) vom dritten Teil (4) sowie vom vierten Teil (5) in Richtung des ersten Teils (2) oder des zweiten Teils (3) erstrecken und diagonal zwischen den Verlängerungen (201) angeordnet sind, sodass sie zwischen den Verlängerungen (201) liegen, um die auf das Gehäuse (B) wirkenden Kräfte aufzunehmen.

2. Ein Absorber (1) nach Anspruch 1, **dadurch gekennzeichnet, dass** mindestens eine Rille (6) vorgesehen ist, die sich in Längsrichtung über das erste Teil (2) und das zweite Teil (3) erstreckt und es ermöglicht, das dritte Teil (4) und das vierte Teil (5) unter Einwirkung der Lasten auf dem ersten Teil (2) und dem zweiten Teil (3) anzuordnen.

3. Ein Absorber (1) nach einem der vorstehenden Ansprüche, **dadurch gekennzeichnet, dass** mindestens eine erste Montagevorrichtung (7) vorgesehen ist, die die abnehmbare Anordnung des ersten Teils (2), des zweiten Teils (3), des dritten Teils (4) und des vierten Teils (5) ermöglicht und die Teile zumindest teilweise umschließt.

4. Ein Absorber (1) nach Anspruch 1, **dadurch gekennzeichnet, dass** das Gehäuse (B) ein Luftfahrzeug bildet, mindestens ein Fahrwerk (L) am Gehäuse (B) vorgesehen ist, das beim Landen des Luftfahrzeugs (H) den Boden berührt, um das Luftfahrzeug zu tragen und/oder dessen Fortbewegung am Boden zu ermöglichen, und eine zweite, abnehmbar am Fahrwerk (L) befestigte, U-förmige Halterung (8) vorgesehen ist, die sich in der ersten Halterung (7) bewegt.

5. Ein Absorber (1) nach einem der vorstehenden Ansprüche, **dadurch gekennzeichnet, dass** die Verlängerung (201) und der Vorsprung (401) aus einem Polymerwerkstoff bestehen und die Absorptionskapazität erhöhen.

6. Ein Absorber (1) nach einem der vorstehenden Ansprüche, **dadurch gekennzeichnet, dass** die Verlängerung (201) und/oder der Vorsprung (401) mittels eines additiven Fertigungsverfahrens hergestellt werden und dadurch flexibel und/oder hochbeständig sind.

7. Ein Absorber (1) nach einem der vorstehenden Ansprüche, **dadurch gekennzeichnet, dass** die Verlängerung (201), die sich vom ersten Teil (2) zum zweiten Teil (3) und vom zweiten Teil (3) zum ersten Teil (2) erstreckt, eine sich verjüngende Querschnittsfläche aufweist.

8. Ein Absorber (1) nach einem der vorstehenden Ansprüche, **dadurch gekennzeichnet, dass** der Vorsprung (401), der sich vom dritten Teil (4) zum ersten Teil (2) oder zum zweiten Teil (3) und vom vierten Teil (5) zum ersten Teil (2) oder zum zweiten Teil (3) erstreckt, eine sich verjüngende Querschnittsfläche aufweist.

9. Ein Absorber (1) nach einem der vorstehenden Ansprüche, **dadurch gekennzeichnet, dass** eine Vielzahl von Vorsprüngen (401), die gemäß einem Dominoeffekt nacheinander zwischen den Verlängerungen (201) angeordnet sind, vorgesehen ist, wenn eine Kraft auf das dritte Teil (4) oder das vierte Teil (5) ausgeübt wird.

## Revendications

1. Absorbeur (1) comprenant un corps (B) ; au moins une première pièce (2) disposée sur le corps (B) ; au moins une seconde pièce (3) disposée en vis-à-vis de la première pièce (2) ; une pluralité de prolongements (201) réalisés en un matériau flexible, disposés sur la première pièce (2) et la seconde pièce (3), et s'étendant depuis la première pièce (2) vers la seconde pièce (3) et depuis la seconde pièce (3) vers la première pièce (2) ; au moins une troisième pièce (4) disposée sur le corps (B), entre la première pièce (2) et la seconde pièce (3) ; et une quatrième pièce (5) disposée sur le corps (B), entre la première pièce (2) et la seconde pièce (3), de manière à être opposée à la troisième pièce (4) en formant une structure en caisson avec la première pièce (2) et la seconde pièce (3) ; **caractérisé par** une pluralité de saillies (401) réalisées en un matériau flexible et disposées sur la troisième pièce (4) et la quatrième pièce (5), dans lequel lesdites saillies (401) s'étendent depuis la troisième pièce (4) et la quatrième pièce (5) vers la première pièce (2) ou la seconde pièce (3) et sont disposées diagonalement entre les prolongements (201) de sorte qu'elles soient interposées entre les prolongements (201) afin d'absorber les forces exercées sur le corps (B).

2. Absorbeur (1) selon la revendication 1, **caractérisé par** au moins une rainure (6) s'étendant longitudinalement le long de la première pièce (2) et de la seconde pièce (3), et permettant à la troisième pièce (4) et à la quatrième pièce (5) d'être disposées sur la première pièce (2) et la seconde pièce (3) sous l'effet des charges appliquées.

3. Absorbeur (1) selon l'une quelconque des revendications précédentes, **caractérisé par** au moins un premier dispositif de montage (7) permettant le montage amovible de la première pièce (2), de la seconde pièce (3), de la troisième pièce (4) et de la quatrième pièce (5), et entourant au moins partiellement lesdites pièces.

4. Absorbeur (1) selon la revendication 1, **caractérisé par** un corps (B) constituant un véhicule aérien ; au moins un train d'atterrissage (L) disposé sur le corps (B), entrant en contact avec le sol (piste) lors de l'atterrissage du véhicule aérien (H) afin de supporter le véhicule aérien et/ou de permettre au véhicule aérien de se déplacer au sol ; un second dispositif de montage (8) fixé de manière amovible au train d'atterrissage (L), réalisé sous forme de « U », apte à se déplacer dans le premier dispositif de montage (7).

5. Absorbeur (1) selon l'une quelconque des revendications précédentes, **caractérisé par** le prolongement (201) et la saillie (401), qui sont réalisées en un matériau polymère et augmentent la capacité d'absorption.

6. Absorbeur (1) selon l'une quelconque des revendications précédentes, **caractérisé par** le prolongement (201) et/ou la saillie (401), produites par un procédé de fabrication additive, présentant ainsi une flexibilité et/ou une durabilité élevée.

7. Absorbeur (1) selon l'une quelconque des revendications précédentes, **caractérisé par** le prolongement (201) s'étendant de la première pièce (2) vers la seconde pièce (3) et de la seconde pièce (3) vers la première pièce (2), présentant une section transversale rétrécissante.

8. Absorbeur (1) selon l'une quelconque des revendications précédentes, **caractérisé par** la saillie (401) s'étendant de la troisième pièce (4) vers la première pièce (2) ou la seconde pièce (3), et de la quatrième pièce (5) vers la première pièce (2) ou la seconde pièce (3), présentant une section transversale rétrécissante.

9. Absorbeur (1) selon l'une quelconque des revendications précédentes, **caractérisé par** une pluralité de saillies (401) interposées séquentiellement entre les prolongements (201) selon un effet domino, lorsqu'une force est appliquée à la troisième pièce (4) ou à la quatrième pièce (5).
